# EUROPEAN PATENT APPLICATION

(11) **EP 4 682 665 A1**
(43) Date of publication of application: **21.01.2026**
(21) Application number: 24189924.4
(22) Date of filing: 20.07.2024
(51) Int. Cl.: G05D 23/19, A41D 13/005

(54) **A TEMPERATURE REGULATING SYSTEM**

(71) Applicant: CLIM8, 69760 Limonest (FR)
(72) Inventor: The designation of the inventor has not yet been filed
(74) Representative: Cochonneau, Olivier

(57) **Abstract**

The invention relates to a temperature regulation system for regulating the temperature of a portion of a body, in particular of a user's body.

The system comprises at least one temperature sensor 1004a, 1004b, 1004c adapted to generate a temperature measurement that relates to a temperature of a given portion of a body, at least one temperature adjustment element 1006a, 1006b, 1006c adapted to provide heat and/or cold to a given portion of the body, arranged on or in the flexible support, a memory unit 1016, 1024 adapted to store at least one threshold temperature related value, a controlling unit1000 in communication with the temperature sensor, with the memory unit 1016, 1024 and with the temperature adjustment element.

The controlling unit is configured to receive the instant temperature of a given portion of the body from the temperature sensor, perform a comparison between at least one instant temperature related value and a triggering temperature related value, activate the temperature adjustment element to provide heat or cold to a given portion of the body depending on the result of said comparison.

The memory unit is further adapted to store possible numbers of textile layers to be worn by a user, associated to incremental temperature values, and the controlling unit is further configured to receive a number of textile layers to be worn by the user and to determine the triggering temperature related value based on said threshold temperature related value and said received number of textile layers, the triggering temperature related value being equal to the threshold temperature related value plus or minus the incremental temperature value stored in the memory unit in association with said received number of textile layers.

## Description

### Field of the invention

The present invention relates to a temperature regulation system for regulating the temperature of a portion of a body, in particular of a user's body.

### Background of the invention

Thermal comfort is driven by the temperature inside a person's body and the temperature at the surface of your body. Deep body temperature of a person is generally 37°C and the mean skin temperature of a person is generally 33°C. People become uncomfortable in a thermal sense when the environment changes for example, increased wind or extra sunny day, or when a person moves to a cooler place. In common situations, discomfort in a thermal sense is felt by a user when the user's skin temperature changes, rather than a change in core body temperature.

Conventional chemical or electric heating systems used in clothing can easily deliver heat at relatively high levels. Most currently available devices consist of a wearable garment with heating pads that can be manually adjusted by the user. In at least some devices the heating pads produce an equal heat output and all the heating pads are activated to provide heat. Existing products are often bulky, heavy, require manual operation and are limited in their range of operation.

On top of this, the known systems use a triggering temperature, which is used to activate or deactivate the heating, which is the same for all the users, and/or which is the same for a given user in all circumstances and at any time.

### Summary of the invention

The invention aims therefore at solving the above-mentioned problems, amongst other problems.

To this end, the invention proposes a temperature regulated system that allows regulation of the temperature of a portion of a body based on the profile of the user, and the current activity of the user.

According to a first aspect, the object of the invention is a temperature regulation system for regulating the temperature of a portion of a body of a user.

The system comprises at least one temperature sensor adapted to generate a temperature measurement that relates to a temperature of a given portion of a body of a user, at least one temperature adjustment element adapted to provide heat and/or cold to a given portion of a body of a user, arranged on or in the flexible support, a memory unit adapted to store at least one threshold temperature related value, a controlling unit in communication with the temperature sensor, and with the temperature adjustment element, and in communication with, or comprising, the memory unit.

The controlling unit is configured to receive the instant temperature of a given portion of the body of a user from the temperature sensor, perform a comparison between at least one instant temperature related value and a triggering temperature related value, activate the temperature adjustment element to provide heat or cold to a given portion of the body of a user depending on the result of said comparison.

The memory unit is further adapted to store a plurality of possible numbers of textile layers to be worn by a user, each associated to one incremental temperature value, and the controlling unit is further configured to receive a number of textile layers to be worn by the user, amongst the possible numbers of textile layers, and to determine the triggering temperature related value based on said threshold temperature related value and said received number of textile layers, the triggering temperature related value being equal to the threshold temperature related value plus or minus the incremental temperature value stored in the memory unit in association with said received number of textile layers.

In some embodiments, the system further comprises one or more of the following features, considered alone or according to any technically possible combination:
- the controlling unit is further configured to determine the triggering temperature related value based on at least one user activity information related to a user instant activity parameter, the triggering temperature related value being equal to the threshold temperature related value plus or minus the incremental temperature value stored in the memory unit in association with the received number of textile layers and plus or minus a quantity which is a function of the user activity information
- the instant user activity parameter is related to the activity of at least a portion of the body of the user, and the temperature regulation system further comprises at least one user activity sensor, adapted to generate a user activity measurement that relates to an activity of said at least a given portion of the body of the user, the controlling unit being in communication with the user activity sensor and being configured to receive the user activity measurement and to determine the user activity information from the user activity measurement;
- the instant user activity parameter is related to the activity of at least a portion of the body of the user, and the temperature regulation system further comprises at least one user activity sensor, adapted to generate a user activity measurement that relates to an activity of said at least a given portion of the body of the user and to determine the user activity information from the user activity measurement, the controlling unit being in communication with the user activity sensor and being configured to receive the user activity information from the user activity sensor;
- at least one of the user activity sensors is a motion sensor, and/or at least one of the user activity sensors is a geographical position sensor, and/or one of the user activity sensors is a heartrate sensor;
- the instant user activity parameter is related to the activity of at least a portion of the body of the user, and the controlling unit comprises an interface adapted to receive from an external device a user activity measurement that relates to an activity of said at least a given portion of the body of the user, the controlling unit being configured to determine the user activity information from the user activity measurement;
- the instant user activity parameter is related to the activity of at least a portion of the body of the user, and the controlling unit comprises an interface adapted to receive from an external device the user activity information;
- the instant user activity parameter is related to the activity of at least a portion of the body of the user, and the controlling unit comprises an interface adapted to receive as a manual input the user activity information;
- the instant user activity parameter is related to the activity of at least a portion of the body of the user, and the controlling unit comprises an interface adapted to receive as a manual input a user activity measurement, the controlling unit being configured to determine the user activity information from the user activity measurement;
- the instant user profile parameter is related to one of: thermal sensitivity, age, time of day, season, gender, body fat, size, weight;
- the controlling unit is configured to activate the temperature adjustment element to provide heat or cold to a given portion of the body when the instant temperature related value reaches the triggering temperature related value;
- the controlling unit is configured to activate the temperature adjustment element to provide heat or cold to a given portion of the body when the instant temperature related value reaches the triggering temperature related value in a predetermined lapse of time;
- the predetermined lapse of time is based on the user activity information and the user profile information;
- the memory unit is part of the controlling unit or of the temperature sensor or of an external portable device;
- the body is the body of a human or animal user, and the given portion of the body is one of the wrists of the body of the user;
- the controlling unit is configured to communicate wirelessly with an external device;
- each of the temperature adjustment elements includes a heating element and/or a cooling element;
- the system further comprises a power supply for supplying power to the controlling unit and the logical unit;
- the power supply is an external power supply.

According to a second aspect, the object of the invention is also a garment to be worn by a human or animal user comprising a temperature regulation system as presented above.

### Drawings

The invention and its advantages may be better understood by referring to the description which follows, given as example and for illustrative purpose only, and by referring to the accompanying drawings listed below:
- figure 1: shows a generalized temperature regulation system;
- figure 2: shows a schematic diagram of a controller that can be used in the temperature regulation system shown in figure 1;

### Detailed description

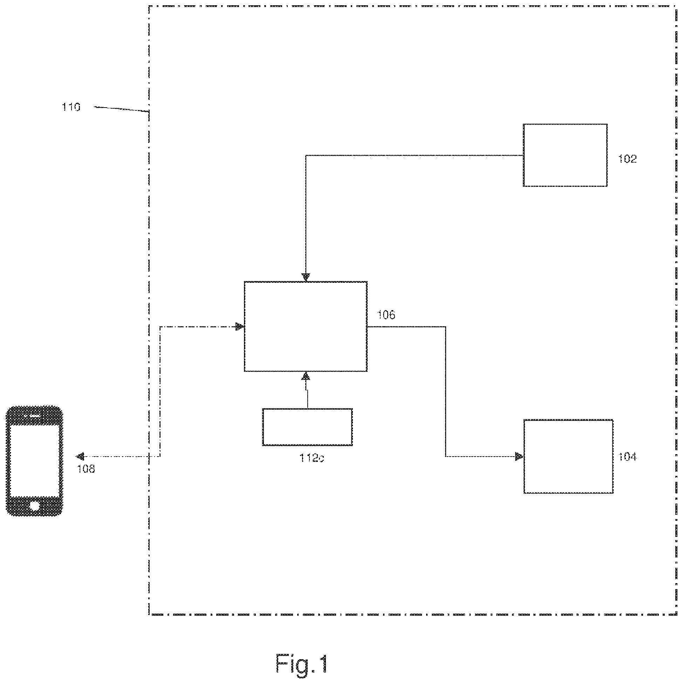

Figure 1 shows a schematic of a generalized temperature regulation system. As shown in figure 1, the temperature regulation system comprises a temperature sensor 102, a temperature adjusting element 104, such as a heating element, and a controlling unit or controller 106 which may be configured to communicate with a user device 108. The system further comprises a flexible support 110 that can be a wearable article 110, or can be integrated in or on such a wearable article.

As shown in figure 1, at least the temperature sensor 102 is disposed on the wearable article such that the temperature sensor 102 is in contact with a portion of the user's body. The temperature sensor 102 is at least directly in contact with the user's skin. Alternatively, the temperature sensor 102 is indirectly in contact with the user's skin, for example through a layer of the wearable garment or article 110. The sensor 102 is configured to measure the skin temperature of the user.

The wearable garment 110 can be any suitable garment 110 that a user can wear on a portion of the user's body. For example, the garment 110 can be a long sleeve shirt, T-shirt, hat, socks, gloves, pants, tights, jacket, beanie or any other suitable wearable garment.

The temperature sensor 102 is configured to generate a temperature measurement that corresponds to the temperature at a portion of the user's body. Preferably the temperature measurement is a skin temperature.

The temperature adjusting element 104 can be any suitable element or device to provide heat or cold to a user. For example, the temperature adjusting element 104 may be a heating pad that can be positioned on the wearable garment 110 and arranged in direct contact with the user's skin or in contact through a layer of textile, to provide heat to a portion of the user's body. The temperature adjusting element 104 provides heat to increase the skin temperature of the user. Alternatively, the temperature adjusting element can be an air conditioning unit in a car or home or can be a smart appliance or a HVAC system of a building or any other suitable device or system to provide heat or cold to a user.

The controller 106 is configured to receive the temperature measurement from the temperature sensor 102. The controller 106 is in wire or wireless communication with the temperature sensor 102 and the temperature adjusting element 104. The controller 106 can be connected by an electrical wire or wirelessly with the temperature sensor 102 and the temperature adjusting element 104. The controller receives the temperature measurement as an electronic signal from the temperature sensor 102. The controller is configured to process the temperature measurement and/or to receive already processed temperature measurement.

The system comprises further a memory unit (not represented in figure 1), adapted to store at least one threshold temperature related value. The controller 106 is also in communication with the memory unit, or comprises this memory unit.

This memory unit can therefore be part of the controller 106, or of an external device 116, or of an electronic module or component external to the controller 106, or a combination of these possibilities.

The controller 106 is configured to receive the instant temperature of a given portion of the body of a user from the temperature sensor 102. Then, the controller 106 performs a comparison between at least one instant temperature related value and a triggering temperature related value, and activate the temperature adjustment element 104 provide heat or cold to a given portion of the body of a user depending on the result of the comparison.

The memory unit is also adapted to store a plurality of possible numbers of textile layers to be worn by a user, each associated to one incremental temperature.

The controller 106 is configured to receive a number of textile layers to be worn by the user, amongst the possible numbers of textile layers, and to determine the triggering temperature related value based on the threshold temperature related value and the received number of textile layers, with the triggering temperature related value being equal to the threshold temperature related value plus or minus the incremental temperature value stored in the memory unit in association with the received number of textile layers.

In a specific embodiment, the incremental value is a positive number which is added to the threshold temperature related value to adjust the triggering temperature related value. Besides, the higher the number of textile layers, the higher the incremental value. Therefore, for any two possible numbers of textile layers stored in the memory, with one of the two being greater than the other, the corresponding incremental value stored in the memory in association with the said one numbers of textile layers is greater than the corresponding incremental value stored in the memory in association with the said other possible numbers of textile layers.

The number of textile layers to be worn by the user is an indicator of the thermal sensitivity of the user. The higher this number of textile layers, the more the triggering temperature value is increased, by adding to the threshold temperature related value a higher incremental value.

Preferably, the number of textile layers to be worn by the user relates to textiles layers to be worn under the flexible support 110, meaning between the skin of the user and the flexible support 110 or a wearable article in or on which the flexible support 110 is integrated.

The controlling unit can also be further configured to determine the triggering temperature related value based on at least one user activity information related to a user instant activity parameter. The triggering temperature related value is then equal to the threshold temperature related value plus or minus the incremental temperature value stored in the memory unit in association with the received number of textile layers and plus or minus a quantity which is a function of the user activity information

Further again, the controlling unit can also be configured to determine the triggering temperature related value based on at least one user profile information related to a user profile parameter. The triggering temperature related value is then equal to the threshold temperature related value plus or minus the incremental temperature value stored in the memory unit in association with the received number of textile layers and plus or minus a quantity which is a function of the user profile information, possibly plus or minus a quantity which is a function of the user activity information

The instant user activity parameter is related to the activity of at least a portion of the body of the user, and the system also comprises at least one user activity sensor, not shown on the figures. This user activity sensor is adapted to generate a user activity measurement that relates to an activity of the given portion of the body of the user.

The controller 106 is in communication with the user activity sensor and is configured to receive the user activity measurement and to determine the user activity information from the user activity measurement.

Alternatively, the user activity sensor is also adapted to determine the user activity information from the user activity measurement. In that case, the controller 106, in communication with the user activity sensor, is configured to receive directly the user activity information from the user activity sensor.

The user activity sensor may be a motion sensor, or a geographical position sensor, or a heartrate sensor. The system may comprise several activity sensors, each being for example of one of the types mentioned above.

In the case of a motion sensor, this sensor can be a 3-axis accelerometer. The accelerometer detects or measures the body movements of the user. The motion measurement is an acceleration measurement or a velocity measurement. The motion measurement is sampled by the controller 106 from the motion sensor. The motion sensor is sampled at any suitable sampling rate. The controller 106 uses the motion measurement to adjust the threshold temperature based on a predetermined relationship.

The user profile parameter is related for example to one of: thermal sensitivity, age, time of day, season, gender, body fat, size, weight.

As examples:
- the thermal sensitivity parameter may be of the following binary type: sensible to cold / not sensible to cold;
- the age parameter may be of the following binary type: less than 50 years old / equal to or greater than 50 years old;
- the time of day parameter may be of the following binary type: between 22h00 and 12h00 / between 12h01 and 21h59;
- the season parameter may be of the following binary type: summer / not summer;
- the gender parameter may be of the following binary type: male / female;
- the body fat parameter may be of the following binary type: for men below 23% / equal to or above 23%, and for women below 32% / equal to or above 32%.

The controller 106 may comprises an interface adapted to receive information such as the number of textile layers to be worn by the user, and/or the user profile parameter. This interface may be adapted to receive the corresponding information from the external device 108, and/or as a manual input from a user. The corresponding information may be directly received from the external device 108 and/or as a manual input from a user, or determined by the controller from one or more other information received from the external device 108 and/or as a manual input from a user.

In the particular case of user activity information, the interface mays be adapted to receive from an external device the user activity measurement. The controller 106 is then configured to determine the user activity information from the user activity measurement received via said interface.

Alternatively, the interface is adapted to receive from an external device directly the user activity information.

The interface may also be adapted to receive the user activity information as a manual input from a user.

Alternatively, the interface is adapted to receive a user activity measurement as a manual input. Then, the controller 106 is configured to determine the user activity information from the user activity measurement received via the interface.

The triggering temperature related value determined by the controller 106 corresponds to the threshold temperature related value plus or minus a quantity which is a function of the user activity information and the user profile information.

In an example, the threshold temperature related value corresponds to the skin temperature of the user for which it is considered that the thermal feeling will be neutral at rest. This value may be averaged for the whole body surface, and is generally around 33 °C. When measured locally, this temperature varies from one body region to another. The further from the body trunk and head regions, the lower this temperature.

The controller 106 activates the temperature adjustment element 104 to provide heat or cold when the instant temperature related value reaches this triggering temperature related value.

The lapse of time for the instant temperature related value to reach this triggering temperature related value, may be taken into account. Then, the controller 106 activates the temperature adjustment element 104 to provide heat or cold when the instant temperature related value reaches this triggering temperature related value in a predetermined lapse of time. This predetermined lapse of time may also be based on the user activity information and the user profile information.

The temperature adjusting element 104 is deactivated by the controller 106 when the temperature measurement exceeds the threshold temperature.

A few examples of how the triggering temperature related value is determined and the temperature adjusting element 104 is activated/deactivated, are given below.

In a first example, the threshold temperature being preset to 33°C, a low or absent activity of the user is taken into account in the determination of the triggering temperature related value.

More precisely, if:
- no activity is detected by the user activity sensor, which corresponds to a rest state, or
- an activity is detected by the user activity sensor, that lasts less than 3 minutes, or
- an activity is detected by the user activity sensor, for a duration greater than 3 minutes, but with a speed, an acceleration or a heartrate, that does not increase of more than 20% during the said duration,
then the triggering temperature related value is equal to the threshold temperature related value minus 0.5 °C.

This example can be generalized as follows, the threshold temperature being preset to a predetermined value θₜₕᵣₑₛₕ.

If:
- no activity is detected by the user activity sensor, which corresponds to a rest state, or
- an activity is detected by the user activity sensor, that lasts less than a first predetermined duration d1, or
- an activity is detected by the user activity sensor, for a duration greater than a first predetermined duration d1, but with a speed, an acceleration or a heartrate, that does not increase of more than a first predetermined percentage p1 during the said first duration d1,
then the triggering temperature related value is equal to the threshold temperature related value minus a first predetermined value δθ1 in °C.

In the above example:
- θₜₕᵣₑₛₕ = 33°C;
- d1 = 3 minutes;
- p1 = 20%;
- δθ1 = 0.5 °C.

In another example, under the same condition of absence of user activity, or low user activity, as explained above, the triggering temperature related value is equal to the threshold temperature related value minus 0,5 °C when this temperature is reached in 30 seconds, therefore corresponding to a temperature decrease at the speed of 1 °C / minute.

This example can be generalized as follows, the threshold temperature being preset to the predetermined value θₜₕᵣₑₛₕ:
under the same condition of absence of user activity, or low user activity, generalized as above, the triggering temperature related value is equal to the threshold temperature related value minus the first predetermined value δθ1 in °C when this temperature is reached in a predetermined lapse of time t1, therefore corresponding to a temperature decrease at a first predetermined speed v1.

In the above example:
- θₜₕᵣₑₛₕ = 33°C;
- δθ1 = 0.5 °C;
- t1 = 30 seconds;
- v1 = 1 °C / minute.

In these two cases, the temperature adjusting element 104 is activated, until the temperature sensor 102 measures a temperature corresponding to the threshold temperature, at which point the temperature adjusting element 104 is deactivated.

In the next examples, the threshold temperature being preset to 33°C, a significant user activity is taken into account in the determination of the triggering temperature related value.

For example, if an activity is detected by the user activity sensor, for a duration greater than 3 minutes, and with a speed, an acceleration or a heartrate, that increases of more than 20% during the said duration, then the triggering temperature related value is equal to the threshold temperature related value minus 2 °C.

This example can be generalized as follows, the threshold temperature being preset to a predetermined value θₜₕᵣₑₛₕ:
if an activity is detected by the user activity sensor, for a duration greater than the first predetermined duration d1 as mentioned previously, and with a speed, an acceleration or a heartrate, that increases of more than the first predetermined percentage p1 as previously mentioned, during the said first duration d1, then the triggering temperature related value is equal to the threshold temperature related value minus a second predetermined value δθ2 in °C.

In the above example:
- θₜₕᵣₑₛₕ = 33°C;
- d1 = 3 minutes;
- p1 = 20%;
- δθ2 = 2°C.

In another example, under the same condition of significant activity of the user as above, the triggering temperature related value is equal to the threshold temperature related value minus 1 °C when this temperature is reached in 30 seconds, therefore corresponding to a temperature decrease at the speed of 2 °C / minute.

This example can be generalized as follows, the threshold temperature being preset to a predetermined value θₜₕᵣₑₛₕ:
under the same condition of user activity generalized as above, the triggering temperature related value is equal to the threshold temperature related value minus half of the second predetermined value δθ2 in °C when this temperature is reached in the predetermined lapse of time t1, therefore corresponding to a temperature decrease at a second predetermined speed v2.

In the above example:
- θₜₕᵣₑₛₕ = 33°C;
- δθ2 = 2 °C;
- t1 = 30 seconds;
- v2 = 2 °C / minute.

In these two cases again, the temperature adjusting element 104 is activated, until the temperature sensor 102 measures a temperature corresponding to the threshold temperature, at which point the temperature adjusting element 104 is deactivated.

In yet another example of significant user activity, the threshold temperature being preset to 33 °C, if an activity is detected by the user activity sensor, for a duration greater than 5 minutes, and with a speed, an acceleration or a heartrate, that increases of more than 20% during the said duration, then the triggering temperature related value is equal to the threshold temperature related value minus 3 °C.

This example can be generalized as follows, the threshold temperature being preset to a predetermined value θₜₕᵣₑₛₕ:
if an activity is detected by the user activity sensor, for a duration greater than a second predetermined duration d2, and with a speed, an acceleration or a heartrate, that increases of more than the first predetermined percentage p1, as previously mentioned, during the said second duration d2, then the triggering temperature related value is equal to the threshold temperature related value minus a third predetermined value δθ3 in °C.

In the above example:
- θₜₕᵣₑₛₕ = 33°C;
- d2 = 5 minutes;
- p1 = 20%;
- δθ3 = 3°C.

In another example, under the same condition of activity of the user as above, the triggering temperature related value is equal to the threshold temperature related value minus 1.5 °C when this temperature is reached in 30 seconds, therefore corresponding to a temperature decrease at the speed of 3 °C / minute.

This example can be generalized as follows, the threshold temperature being preset to a predetermined value θₜₕᵣₑₛₕ:
under the same condition of user activity generalized as above, the triggering temperature related value is equal to the threshold temperature related value minus half of the third predetermined value δθ3 in °C when this temperature is reached in the predetermined lapse of time t1, therefore corresponding to a temperature decrease at a third predetermined speed v3. In the above example:
- θₜₕᵣₑₛₕ = 33°C;
- δθ3 = 3 °C;
- t1 = 30 seconds;
- v3 = 3 °C / minute.

In these two cases again, the temperature adjusting element 104 is activated, until the temperature sensor 102 measures a temperature corresponding to the threshold temperature, at which point the temperature adjusting element 104 is deactivated.

In yet another example of significant user activity, the threshold temperature being preset to 33 °C, if an activity is detected by the user activity sensor, for a duration greater than 10 minutes, and with a speed, an acceleration or a heartrate, that increases of more than 20% during the said duration, then the triggering temperature related value is equal to the threshold temperature related value minus 5 °C.

This example can be generalized as follows, the threshold temperature being preset to a predetermined value θₜₕᵣₑₛₕ:
if an activity is detected by the user activity sensor, for a duration greater than a third predetermined duration d3, and with a speed, an acceleration or a heartrate, that increases of more than the first predetermined percentage p1, as previously mentioned, during the said third duration 3, then the triggering temperature related value is equal to the threshold temperature related value minus a fourth predetermined value δθ4 in °C.

In the above example:
- θₜₕᵣₑₛₕ = 33°C;
- d3 = 10 minutes;
- p1 = 20%;
- δθ4 = 5 °C.

In another example, under the same condition of activity of the user as above, the triggering temperature related value is equal to the threshold temperature related value minus 1.5 °C when this temperature is reached in 30 seconds, therefore corresponding to a temperature decrease at the speed of 3 °C / minute.

This example can be generalized as follows, the threshold temperature being preset to a predetermined value θₜₕᵣₑₛₕ:
under the same condition of user activity generalized as above, the triggering temperature related value is equal to the threshold temperature related value minus half of the third predetermined value δθ3 in °C when this temperature is reached in the predetermined lapse of time t, therefore corresponding to a temperature decrease at the third predetermined speed v3.

In the above example:
- θₜₕᵣₑₛₕ = 33°C;
- δθ3 = 3 °C;
- t1 = 30 seconds;
- v3 = 3 °C / minute.

In these two cases again, the temperature adjusting element 104 is activated, until the temperature sensor 102 measures a temperature corresponding to the threshold temperature, at which point the temperature adjusting element 104 is deactivated.

In yet another example of significant user activity, the threshold temperature being preset to 33 °C, if an activity is detected by the user activity sensor, for a duration greater than 15 minutes, and with a speed, an acceleration or a heartrate, that increases of more than 30% during the said duration, then the triggering temperature related value is equal to the threshold temperature related value minus 8 °C.

This example can be generalized as follows, the threshold temperature being preset to a predetermined value θₜₕᵣₑₛₕ:
if an activity is detected by the user activity sensor, for a duration greater than a fourth predetermined duration d4, and with a speed, an acceleration or a heartrate, that increases of more than a second predetermined percentage p2, during the said fourth duration d4, then the triggering temperature related value is equal to the threshold temperature related value minus a fifth predetermined value δθ5 in °C.

In the above example:
- θₜₕᵣₑₛₕ = 33°C;
- d4 = 15 minutes;
- p2 = 30%;
- δθ5 = 8 °C.

In another example, under the same condition of activity of the user as above, the triggering temperature related value is equal to the threshold temperature related value minus 1.5 °C when this temperature is reached in 30 seconds, therefore corresponding to a temperature decrease at the speed of 3 °C / minute.

This example can be generalized as follows, the threshold temperature being preset to a predetermined value θₜₕᵣₑₛₕ:
under the same condition of user activity generalized as above, the triggering temperature related value is equal to the threshold temperature related value minus half of the third predetermined value δθ3 in °C when this temperature is reached in the predetermined lapse of time t1, therefore corresponding to a temperature decrease at the third predetermined speed v3.

In the above example:
- θₜₕᵣₑₛₕ = 33°C;
- δθ3 = 3 °C;
- t1 = 30 seconds;
- v3 = 3 °C / minute.

In these two cases again, the temperature adjusting element 104 is activated, until the temperature sensor 102 measures a temperature corresponding to the threshold temperature, at which point the temperature adjusting element 104 is deactivated.

Now, in order to take into account not only the user activity but also the user profile, at least one user profile information is used to adjust the triggering temperature.

Let us consider for example a user profile information related to thermal sensitivity of the user. In that case, in all the examples above, if the user profile information is "not sensible to cold", the predetermined value δθi (δθ1, δθ2, δθ3, δθ4, δθ5) in °C used to alter the threshold temperature is increased by 0.025 °C.

This can be generalized as follows: if the user profile information is "not sensible to cold", the predetermined value δθi in °C used to alter the threshold temperature is increased by a predetermined value dtemp in °C.

Let us now consider for example a user profile information related to the age of the user. In that case, in all the examples above, if the user profile information is "less than 50 years old", the predetermined value δθi (δθ1, δθ2, δθ3, δθ4, δθ5) in °C used to alter the threshold temperature is increased by 0.025 °C.

This can be generalized as follows: if the user profile information is "less than 50 years old", the predetermined value δθi in °C used to alter the threshold temperature is increased by a predetermined value dtemp in °C.

Let us consider now for example a user profile information related to the time of the day. In that case, in all the examples above, if the user profile information is "between 12:01 and 21:59", the predetermined value δθi (δθ1, δθ2, δθ3, δθ4, δθ5) in °C used to alter the threshold temperature is increased by 0.025 °C.

This can be generalized as follows: if the user profile information is "between 12:01 and 21:59", the predetermined value δθi in °C used to alter the threshold temperature is increased by a predetermined value dtemp in °C.

Let us consider now for example a user profile information related to the season. In that case, in all the examples above, if the user profile information is "summer", the predetermined value δθi (δθ1, δθ2, δθ3, δθ4, δθ5) in °C used to alter the threshold temperature is increased by 0.025 °C.

This can be generalized as follows: if the user profile information is "summer", the predetermined value δθ1 in °C used to alter the threshold temperature is increased by a predetermined value dtemp in °C.

Let us consider now for example a user profile information related to the gender. In that case, in all the examples above, if the user profile information is "male", the predetermined value δθ1 (δθ1, δθ2, δθ3, δθ4, δθ5) in °C used to alter the threshold temperature is increased by 0.025 °C.

This can be generalized as follows: if the user profile information is "male", the predetermined value δθ1 in °C used to alter the threshold temperature is increased by a predetermined value dtemp in °C.

Let us consider now for example a user profile information related to the body fat combined with the gender. In that case, in all the examples above, if the user profile information is "above 32%" and "female", or "above 23%" and "male", the predetermined value δθ1 (δθ1, δθ2, δθ3, δθ4, δθ5) in °C used to alter the threshold temperature is increased by 0.025 °C.

This can be generalized as follows: if the user profile information is "above 32%" and "female", or "above 23%" and "male", the predetermined value δθ1 in °C used to alter the threshold temperature is increased by a predetermined value dtemp in °C.

The user device 108 is a portable device that includes at least a processor, a memory and a user interface, that can be used by the user as an input-output interface. The user device 108 is a low energy wireless system. The user device 108 may, for example, be a smartphone or a tablet. The user device 108 is adapted for two-way communication with the controller 106, such that information can be transmitted from the user device 108 to the controller 106 and information can be transmitted from the controller 106 to the user device 108. The user device 108 preferably uses a low energy wireless system such as Bluetooth or infra-red as the wireless communication protocol.

The system further comprises a power source 112c that is connected to the controller 106 to power the controller 106. The power source 112c can transmit power via a wired connection or wirelessly. The controller 106 and the power source 112c are preferably disposed on the wearable garment 110.

Alternatively, the power source can be the power source of the user device 108.

The controller 106 includes at least a processor, a memory unit and a power unit. The power unit generates power and the power unit preferably comprises rechargeable batteries. The processor, memory unit and power unit are preferably arranged in a casing.

The controller 106 can also receive a user profile information from the user via the user device 108. The user profile information is input by the user into the user device 108. The user profile information is a specific characteristic of a user. Some examples of user profile information are age, gender, thermal sensitivity, weight and so on. The controller 106 processes a received one or more user profile information and use it or them to determine the triggering temperature related value as explained above, in combination with the user activity information.

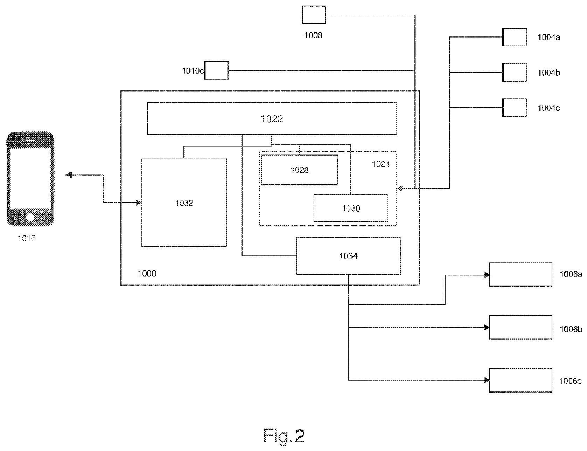

The structure and operation of the controller for the temperature regulation system will now be described with respect to figure 2, which shows a controller 1000. The controller 106 of figure 1 and the controller 1000 of figure 2 have a same structure and function the same manner.

Figure 2 shows a generalized schematic of the controller 1000 in communication with temperature sensors 1004a-1004c, a plurality of temperature adjusting elements 1006a-1006c, and at least one user activity sensor such as a motion sensor 1010c. It may also comprise one or more environmental sensors 1008. The sensors shown in figure 2 are generic representations to illustrate operation of the generalized controller 1000. The functionality of the controller and interaction with the sensors and user device is applicable in any of the earlier embodiments described.

As shown in figure 2, controller 1000 comprises a logical unit 1022, such as a processor 1022, a memory unit 1024 and a power unit 1026. The controller 1000, in this example, is a microcontroller, i.e. it includes all components on a single chip or integrated circuit. The processor 1022 is a microprocessor that can process electronic commands. The processor 1022 can execute commands stored in the non-transitory computer readable memory unit 1024. The processor 1022 is preferably in the form of an integrated circuit. The memory unit 1024 comprises ROM 1028 and RAM 1030. The power unit 1026 includes one or more rechargeable batteries that are disposed in a casing and in communication with the processor. The controller 1000 also includes other essential electronic components for interfacing the various components described and appropriate interfacing circuitry.

The controller 1000 further includes a communication module 1032 which is functionally part of a controlling unit 1032, 1034. The communication module 1032 is low energy wireless system such as a Bluetooth module. The communication module 1032 is in wire or wireless communication with the processor 1022 and allows the controller 1000 to communicate with a user device 1016 similar to the user device 108 mentioned in reference to figure 1.

A local application that is executable on the user device 1016 allows communication between the user device 1016 and the controller. The application also allows for a user to access an interface that allows a user to input the number of textile layers, amongst possible numbers of textile layers store in the memory, and also for example user profile information (as described earlier) as well as additionally modify controller operating modes.

The controller 1000 is also in communication with a plurality of temperature sensors and temperature adjusting elements that are disposed for example on a wearable garment. The controller 1000 is configured to receive a temperature measurement from a temperature sensor. The temperature measurement relates to a skin temperature of the user. The controller 1000 is further configured to determine the triggering temperature as explained above. The controller 1000 continuously receives temperature measurements. The controller 1000 deactivates the temperature adjusting element once the temperature measurement exceeds the threshold temperature. It should be noted that the temperature sensors described herein measure the skin temperature, but alternative sensors can be used that allow other temperature measurements such as muscle temperature or core temperature and so on.

Each temperature sensor is associated with a temperature adjusting element. The controller 1000 receives a plurality of temperature measurements, each temperature measurement being received from a single temperature sensor. The controller 1000 determine the triggering temperature for each of the temperature adjusting elements as explained above. The controller 1000 allows for localized or selective heating or cooling of specific portions of the user's body to heat.

The controller 1000 is configured to compare the average temperature with a threshold temperature. If the average temperature is less than the threshold temperature the controller activates all the heating pads 1006a-1006c to heat the user's body. All the heating pads 1006a-1006c are activated to the same intensity level.

The controller 1000 is configured to provide an activation signal along the power lines to the temperature adjusting elements 1006a-1006c. The activation signal is preferably a pulse width modulated (PWM) power signal. The controller 1000 includes a PWM module 1034 which is functionally part of the controlling unit 1032, 1034. This PWM module 1034 can be integrated into the processor or connected to the processor and the power unit. The PWM module 1034 generates a PWM signal and transmits such along the power lines to the heating pads 1006a-1006c. A PWM signal conserves the power from the power unit.

The temperature regulation system as described is advantageous because the system determines a temperature distribution across a user's skin and selectively energizes or activates a temperature adjusting element in the location where the temperature is less than a threshold temperature. This is further advantageous because power consumption is reduced. Further the temperature regulation system as described is also advantageous because the system takes into account various factors or parameters that can affect a person's thermal comfort or sense of comfort.

In another further embodiment of the disclosure, the temperature regulation system may be arranged to operate with a temperature adjustment element which includes a heating element as described above and/or a cooling element. When operating with a cooling element, similar operational logic described with reference to the controller above may apply, although modifications to operate with a cooling element with different threshold calculations may be used. Cooling elements, including, but not limited to piezoelectric cooling systems, heat pumps or transfer systems including heat sinks, fans or radiators may also be used. These embodiments may be advantageous in alternative environments where it would be desirable to achieve a cooling effect over that of a heating effect.

The above description has been directed to specific embodiments of this invention which is, however, not limited to these embodiments described for purpose of example only.

In particular, the invention concerns not only a temperature regulation system for regulating the temperature of a portion of a human or animal user's body, but more generally for regulating the temperature of a portion of any other body such as a recipient for receiving food or a liquid.

Also, the above description not only relates to comparing a temperature measurement or a change of rate of temperature, with a threshold temperature or threshold change of rate, but more generally to comparing any instant temperature related value with a corresponding temperature related threshold value.

Besides, the above description relates to a controller, comprising a logical unit, a memory unit and controlling unit, in communication with the temperature sensors, the heat adjustment elements, and the user device. Alternatively, the memory unit may be part of one of the temperature sensors or of the user device, and the logical unit may be part of the user device.

Also, the above description relates to examples where the system is integrated to a wearable garment for a user, human or animal. But it extends to a system integrated or part of an accessory such as a belt, a wrist lace or a watch, a shoe, etc...

## Claims

1. A temperature regulation system for regulating the temperature of a body of a user, the temperature regulation system comprising:
- at least one temperature sensor (102, 1004a, 1004b, 1004c) adapted to generate a temperature measurement that relates to a temperature of a given portion of a body of a user;
- at least one temperature adjustment element (104, 1006a, 1006b, 1006c) adapted to provide heat and/or cold to a given portion of the body of a user, arranged on or in the flexible support (110);
- a memory unit (1016, 1024) adapted to store at least one threshold temperature related value;
- a controlling unit (106, 1000) in communication with the temperature sensor (102, 1004a, 1004b, 1004c), and with the temperature adjustment element (104, 1006a, 1006b, 1006c), and in communication with, or comprising, the memory unit (1016, 1024), and being configured to:
• receive the instant temperature of a given portion of the body of a user from the temperature sensor (102, 1004a, 1004b, 1004c),
• perform a comparison between at least one instant temperature related value and a triggering temperature related value,
• activate the temperature adjustment element (104, 1006a, 1006b, 1006c) to provide heat or cold to a given portion of the body of a user depending on the result of said comparison,
wherein the memory unit (1016, 1024) is further adapted to store a plurality of possible numbers of textile layers to be worn by a user, each associated to one incremental temperature value, and the controlling unit (106, 1000) is further configured to receive a number of textile layers to be worn by the user, amongst the possible numbers of textile layers, and to determine the triggering temperature related value based on said threshold temperature related value and said received number of textile layers, the triggering temperature related value being equal to the threshold temperature related value plus or minus the incremental temperature value stored in the memory unit in association with said received number of textile layers.

2. A temperature regulation system in accordance with claim 1, wherein the controlling unit (106, 1000) is further configured to determine the triggering temperature related value based on at least one user activity information related to a user instant activity parameter, the triggering temperature related value being equal to the threshold temperature related value plus or minus the incremental temperature value stored in the memory unit in association with the received number of textile layers and plus or minus a quantity which is a function of the user activity information.

3. A temperature regulation system in accordance with claim 2, wherein the instant user activity parameter is related to the activity of at least a portion of the body of the user, and wherein the temperature regulation system further comprises at least one user activity sensor, adapted to generate a user activity measurement that relates to an activity of said at least a given portion of the body of the user, the controlling unit (106, 1000) being in communication with the user activity sensor and being configured to receive the user activity measurement and to determine the user activity information from the user activity measurement.

4. A temperature regulation system in accordance with claim 2, wherein the instant user activity parameter is related to the activity of at least a portion of the body of the user, and wherein the temperature regulation system further comprises at least one user activity sensor, adapted to generate a user activity measurement that relates to an activity of said at least a given portion of the body of the user and to determine the user activity information from the user activity measurement, the controlling unit (106, 1000) being in communication with the user activity sensor and being configured to receive the user activity information from the user activity sensor.

5. A temperature regulation system in accordance with claim 3 or 4, wherein at least one of the user activity sensors is a motion sensor, and/or at least one of the user activity sensors is a geographical position sensor, and/or one of the user activity sensors is a heartrate sensor

6. A temperature regulation system in accordance with any of claims 2 to 5, wherein the user instant activity parameter is related to the activity of at least a portion of the body of the user, and the controlling unit (106, 1000) comprises an interface adapted to receive from an external device a user activity measurement that relates to an activity of said at least a given portion of the body of the user, the controlling unit (106, 1000) being configured to determine the user activity information from the user activity measurement.

7. A temperature regulation system in accordance with any of claims 2 to 5, wherein the user instant activity parameter is related to the activity of at least a portion of the body of the user, and the controlling unit (106, 1000) comprises an interface adapted to receive from an external device the user activity information.

8. A temperature regulation system in accordance with any of claims 2 to 7, wherein the user instant activity parameter is related to the activity of at least a portion of the body of the user, and the controlling unit (106, 1000) comprises an interface adapted to receive as a manual input the user activity information.

9. A temperature regulation system in accordance with any of claims 1 to 8, wherein the user instant activity parameter is related to the activity of at least a portion of the body of the user, and the controlling unit (106, 1000) comprises an interface adapted to receive as a manual input a user activity measurement, the controlling unit (106, 1000) being configured to determine the user activity information from the user activity measurement.

10. A temperature regulation system in accordance with any of claims 1 to 9, wherein the controlling unit (106, 1000) is configured to activate the temperature adjustment element (104, 1006a, 1006b, 1006c) to provide heat or cold to a given portion of the body when the instant temperature related value reaches the triggering temperature related value.

11. A temperature regulation system in accordance with claim 10, wherein the controlling unit (106, 1000) is configured to activate the temperature adjustment element (104, 1006a, 1006b, 1006c) to provide heat or cold to a given portion of the body when the instant temperature related value reaches the triggering temperature related value in a predetermined lapse of time.

12. A temperature regulation system in accordance with claim 11, wherein the predetermined lapse of time is based on the user activity information and the user profile information.

13. A temperature regulation system in accordance with any of claims 1 to 12, wherein the memory unit (1024, 1016) is part of the controlling unit (106, 1000) or of the temperature sensor (102, 1004a, 1004b, 1004c) or of an external portable device (1016).

14. A temperature regulation system in accordance with any of claims 1 to 13, wherein the controlling unit (106, 1000) is configured to communicate wirelessly with an external device (1016).

15. Garment to be worn by a human or animal user comprising a temperature regulation system in accordance with any of claims 1 to 14.
